# EUROPEAN PATENT APPLICATION

(11) **EP 4 834 108 A1**
(43) Date of publication of application: **04.11.2026**
(21) Application number: 24913039.4
(22) Date of filing: 26.12.2024
(51) Int. Cl.: A01N 43/50, A01G 7/06, A01G 22/05, A01P 21/00

(54) **AGENT FOR SHORTENING GROWTH PERIOD OF PLANT, FORMULATION FOR SHORTENING GROWTH PERIOD, AGENT FOR INDUCING EXPRESSION OF ANTHOGENESIS INDUCING GENE, METHOD FOR SHORTENING GROWTH PERIOD OF PLANT, PLANT, AGENT FOR MAKING GROWTH SPEED OF PLANT UNIFORM, AND METHOD FOR MAKING GROWTH SPEED OF PLANT UNIFORM**

(30) Priority: 27.12.2023 JP 2023220982
(71) Applicant: Kureha Corporation, Chuo-ku Tokyo 103-8552 (JP)
(72) Inventor: HIGASHIYAMA, Yukihiro, Tokyo 103-8552 (JP); JIMBO, Yusuke, Tokyo 103-8552 (JP); KOSHIYAMA, Tatsuyuki, Tokyo 103-8552 (JP); TETSU, Naoki, Tokyo 103-8552 (JP)
(74) Representative: Hoefer & Partner Patentanwälte mbB
(86) International application number: PCT/JP2024/046239
(87) International publication number: WO 2025/143153

(57) **Abstract**

Provided is an agent for shortening a growth period of a plant. The agent contains an active component, which is a compound represented by the following Formula (I) or a tautomer thereof, or an agronomically acceptable salt thereof. In Formula (I), R¹ and R² each independently represent a hydrogen atom or an alkyl group having from 1 to 4 carbons, and R³, R⁴, and R⁵ each independently represent an alkyl group having from 1 to 4 carbons:

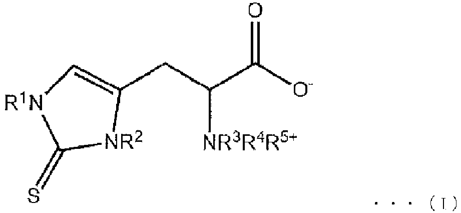

## Description

### TECHNICAL FIELD

The present invention relates to an agent for shortening a growth period of a plant, a formulation for shortening a growth period, an expression inducer for a flowering induction gene, a method for shortening a growth period of a plant, a plant body, an agent for equalizing a growth rate of a plant, and a method for equalizing a growth rate of a plant.

### BACKGROUND ART

Plants are characterized by requiring a long period of time from seeding or transplanting of seedlings to flowering or fruit setting to harvest, due to their nature. In order to reduce the growth costs of plants and the possibility of variation in harvest yield due to poor weather or the like, there is a demand to shorten the growth period of plants so that the plants can be harvested in a short time.

For example, Patent Document 1 describes that, in a preset timing after a seed or bulb under cultivation germinates and shoots, the shoot or seedling is radiated with a microwave for a preset period of time, and the switch timing from the vegetative growth stage to the reproductive growth stage can be advanced to cause the flowering and fruiting early so that the harvest timing is advanced.

Also, Patent Document 2 describes that the growth of a plant can be promoted by performing exposure to NO₂ at a beginning stage of growth of the plant.

Further, Patent Document 3 describes that application of an aqueous solution of ergothioneine to a germinated plant body increases plant height, the number of flowers and fruits, and the yield of seeds.

### CITATION LIST

### PATENT DOCUMENT

Patent Document 1: WO 2017/022563
Patent Document 2: JP 2012-235748 A
Patent Document 3: WO 2021/005970

### SUMMARY OF INVENTION

### TECHNICAL PROBLEM

As described in Patent Documents 1 and 2, methods have been studied for shortening the growth period of a plant by irradiating a germinated plant with microwaves or exposing the plant to NO₂. However, these methods require large-scale facilities, and thus are expensive, and it is not easy to treat a large number of plants. In addition, when the harvest timing is not aligned in agriculture or horticulture, the overall growth period of crops may be prolonged, or it may be necessary to seed more plants to thin them out so that they grow at the same pace. Therefore, there is a demand for the development of a method for shortening the growth period of plants by treatment with a treatment agent and a method for equalizing the growth rate.

The present invention has been made in view of the above-described issues, and an object thereof is to provide an agent for shortening a growth period of a plant, a formulation for shortening a growth period, an expression inducer for a flowering induction gene, a method for shortening a growth period of a plant using the agent, and a plant body whose growth period is shortened using the agent.

### SOLUTION TO PROBLEM

An embodiment of the present invention for solving the above-described issues relates to an agent for shortening a growth period of a plant, a formulation for shortening a growth period, a method for shortening a growth period of a plant, a plant body, an agent for equalizing a growth rate of a plant, and a method for equalizing a growth rate of a plant according to the following [1] to [13].
[1] An agent for shortening a growth period of a plant, the agent including an active component, the active component being a compound represented by Formula (I) below or a tautomer thereof, or an agronomically acceptable salt thereof: 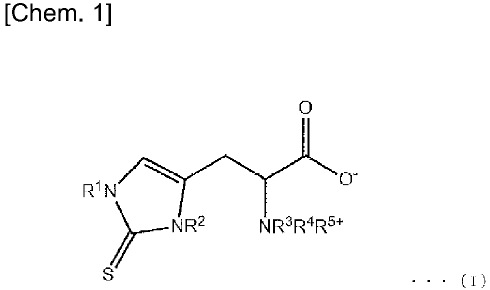
   wherein in Formula (I), R¹ and R² each independently represent a hydrogen atom or an alkyl group having from 1 to 4 carbons, and
   R³, R⁴, and R⁵ each independently represent an alkyl group having from 1 to 4 carbons.
[2] The agent for shortening a growth period of a plant according to [1], wherein the compound represented by Formula (I) is ergothioneine.
[3] The agent for shortening a growth period of a plant according to [2], wherein the ergothioneine includes D-ergothioneine.
[4] The agent for shortening a growth period of a plant according to [1] or [2], wherein
   the agent is an early flowering agent.
[5] The agent for shortening a growth period of a plant according to [1] or [2], wherein
   the agent is an early fruit-setting agent.
[6] The agent for shortening a growth period of a plant according to any of [1] to [5], wherein the agent induces an expression of a flowering induction gene in a treated plant.
[7] An expression inducer for a flowering induction gene, the expression inducer including an active component, the active component being a compound represented by Formula (I) below or a tautomer thereof, or an agronomically acceptable salt thereof: 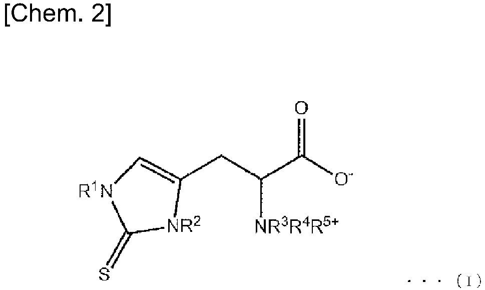
[8] A formulation for shortening a growth period of a plant, the formulation including an active component, the active component being a compound represented by Formula (I) below or a tautomer thereof, or an agronomically acceptable salt thereof: 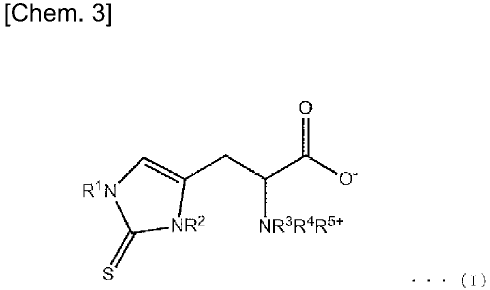 wherein in Formula (I), R¹ and R² each independently represent a hydrogen atom or an alkyl group having from 1 to 4 carbons, and R³, R⁴, and R⁵ each independently represent an alkyl group having from 1 to 4 carbons .
[9] A method for shortening a growth period of a plant, the method including treating a plant with a treatment agent containing the formulation described in [8].
[10] The method for shortening a growth period of a plant according to [9], wherein treatment with the treatment agent causes early flowering of the plant.
[11] The method for shortening a growth period of a plant according to [9], wherein treatment with the treatment agent causes early fruit setting of the plant.
[12] A plant body, which is treated with a treatment agent containing the formulation described in [8] and has a shortened growth period.
[13] The plant body according to [12], wherein the plant body is a propagule or a transplanting seedling.
[14] The plant body according to [12] or [13], wherein the plant body is a tomato.
[15] An agent for equalizing a growth rate of a plant, the agent including an active component, the active component being a compound represented by Formula (I) below or a tautomer thereof, or an agronomically acceptable salt thereof: 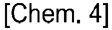 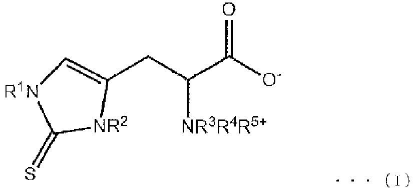
   wherein in Formula (I), R¹ and R² each independently represent a hydrogen atom or an alkyl group having from 1 to 4 carbons,
   and R³, R⁴, and R⁵ each independently represent an alkyl group having from 1 to 4 carbons .
[16] A method for equalizing a harvest timing of a plant, the method including treating a plant with a treatment agent including a formulation containing an active component, the active component being a compound represented by Formula (I) below or a tautomer thereof, or an agronomically acceptable salt thereof: 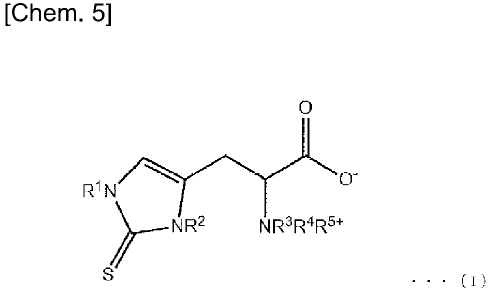
   wherein in Formula (I), R¹ and R² each independently represent a hydrogen atom or an alkyl group having from 1 to 4 carbons, and
   R³, R⁴, and R⁵ each independently represent an alkyl group having from 1 to 4 carbons .

### ADVANTAGEOUS EFFECTS OF INVENTION

According to the present invention, provided are an agent for shortening a growth period of a plant, a formulation for shortening a growth period, a method for shortening a growth period of a plant by using the agent, a plant body whose growth period is shortened by using the agent, an agent for equalizing a growth rate of a plant, and a method for equalizing a growth rate of a plant.

### DESCRIPTION OF EMBODIMENTS

One embodiment of the present invention relates to an agent for shortening a growth period of a plant or an agent for equalizing the growth rate of a plant, the agent including an active component, the active component being a compound represented by Formula (I) below or a tautomer thereof, or an agronomically acceptable salt thereof.

The active component is a compound represented by Formula (I) below or a tautomer thereof, or agronomically an acceptable salt thereof. The agent for shortening a growth period or the agent for equalizing the growth rate may contain only one of the active components or may contain a plurality of the active components.

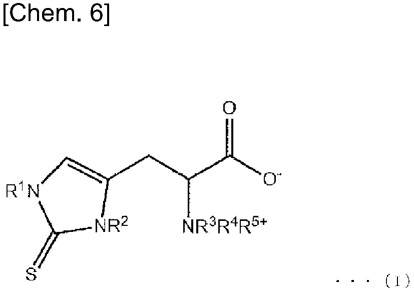

In Formula (I), R¹ and R² each independently represent a hydrogen atom or an alkyl group having from 1 to 4 carbons, and R³, R⁴, and R⁵ each independently represent an alkyl group having from 1 to 4 carbons.

The alkyl group that can be included in R¹ to R⁵ may be linear or branched. Examples of the alkyl group that can be included in R¹ to R⁵ include a methyl group, an ethyl group, a propyl group, an isopropyl group, a butyl group, an isobutyl group, a sec-butyl group, and a tert-butyl group.

At least one of R¹ or R² is a hydrogen atom, and more preferably both of them are hydrogen atoms. When R¹ and R² are alkyl groups, they are preferably methyl groups, ethyl groups or propyl groups, more preferably methyl groups or ethyl groups, and even more preferably methyl groups.

R³, R⁴, and R⁵ are each preferably independently a methyl group, an ethyl group, or a propyl group, more preferably a methyl group or an ethyl group, and even more preferably a methyl group. At least one of R³, R⁴, or R⁵ is preferably a methyl group, more preferably at least two of them are methyl groups, and even more preferably all of them are methyl groups.

When at least one of R¹ or R² is a hydrogen atom, the compound represented by Formula (I) has a tautomer. More specifically, when R² is a hydrogen atom, the compound represented by Formula (I) has a compound represented by Formula (II) below as a tautomer. When R¹ is a hydrogen atom, the compound represented by Formula (I) has a compound represented by Formula (III) below as a tautomer. Note that the term "tautomer" as used herein means both the compound represented by Formula (II) and the compound represented by Formula (III).

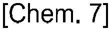

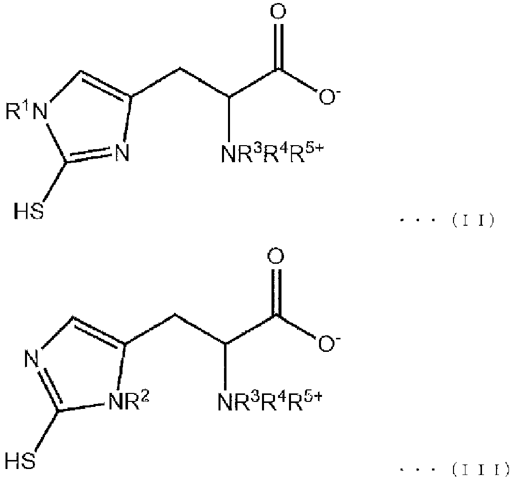

In Formulas (II) and (III), R¹ to R⁵ are the same as R¹ to R⁵ in Formula (I).

Normally, in a solution, the compound represented by Formula (I) and the compound represented by Formula (II) or (III) can exist in an equilibrium. A ratio of the compound represented by Formula (I) to the compound represented by Formula (II) or (III) can vary depending on the solvent, temperature, pH, or the like.

Also, the compound represented by Formula (I) or a tautomer thereof has optical isomers. The compound represented by Formula (I) or a tautomer thereof may contain an L-form or a D-form. The compound represented by Formula (I) or a tautomer thereof may contain only the L-form, only the D-form, or a mixture thereof (LD-form). From the viewpoint of enhancing the effect of shortening the growth period, the compound represented by Formula (I) or a tautomer thereof preferably contains the D-form.

In the case of a mixture of the L-form and the D-form, the ratio of the D-form to the L-form (D-form/L-form × 100% is preferably more than 0% and less than 100%, more preferably more than 0% and 50% or less, still more preferably more than 0% and 30% or less, and particularly preferably more than 0% and 10% or less, in terms of mass ratio.

The compound represented by Formula (I) or a tautomer thereof is preferably ergothioneine, and from the viewpoint of more remarkably exhibiting the effects of the present invention, the compound may contain D-ergothioneine, or may be a mixture of D-ergothioneine and L-ergothioneine.

As these compounds, commercially available compounds thereof may be used, or those synthesized by a technique well known to those skilled in the art, for example, a method described in JP 2013-506706 T or JP 2006-160748 A may be used. Ergothioneine is known to be produced by bacteria and fungi. Examples of such a production method using a microorganism include methods described in JP 2012-105618 A, JP 2014-223051 A, WO 2016/104437, WO 2016/121285, WO 2015/168112, and WO 2017/150304. As ergothioneine, a culture containing ergothioneine and obtained from these microorganisms may be used, or ergothioneine obtained by concentrating or purifying the culture may be used.

"Agronomically acceptable" means that it is safe, non-toxic, and not undesired biologically or otherwise, but it is acceptable for agricultural use, particularly for agricultural use that shortens the growth period.

The "agronomically acceptable salt" of the compound represented by Formula (I) or a tautomer thereof is a salt that is agronomically acceptable as defined above, and means those capable of providing the action and effect of the compound represented by Formula (I) or a tautomer thereof. Examples of such a salt include hydrates, solvates, acid addition salts, salts formed when an acidic proton (proton acid) present in the compound represented by Formula (I) or a tautomer thereof is substituted with a metal ion, and salts formed when the acidic proton coordinates with an organic base or an inorganic base.

The acid addition salt may be formed with an inorganic acid or an organic acid. Examples of the inorganic acid include hydrochloric acid, hydrobromic acid, sulfuric acid, nitric acid, and phosphoric acid. Examples of the organic acid include acetic acid, benzenesulfonic acid, benzoic acid, camphorsulfonic acid, citric acid, ethanesulfonic acid, fumaric acid, glucoheptonic acid, gluconic acid, glutamic acid, glycolic acid, hydroxynaphthoic acid, 2-hydroxyethanesulfonic acid, lactic acid, maleic acid, malic acid, mandelic acid, methanesulfonic acid, muconic acid, 2-naphthalenesulfonic acid, propionic acid, salicylic acid, succinic acid, dibenzoyl-L-tartaric acid, tartaric acid, p-toluenesulfonic acid, trimethylacetic acid, and trifluoroacetic acid.

Examples of the metal ion capable of substituting the acidic proton present in the compound represented by Formula (I) or a tautomer thereof include alkali metal ions, alkaline earth metal ions, and aluminum ions.

Examples of the organic base capable of coordinating with the acidic proton present in the compound represented by Formula (I) or a tautomer thereof include diethanolamine, ethanolamine, N-methylglucamine, triethanolamine, and tromethamine. Examples of the inorganic base capable of coordinating with the acidic proton present in the compound represented by Formula (I) or a tautomer thereof include aluminum hydroxide, calcium hydroxide, potassium hydroxide, sodium carbonate, and sodium hydroxide.

The shortening of the growth period according to the present embodiment is to shorten the growth period of a plant using the active component as an active ingredient. For example, by treating a plant body with a treatment agent containing the active component, effects such as accelerating flower bud formation, accelerating budding, accelerating flowering, accelerating fruit setting and fruiting, and accelerating harvesting are expected. Therefore, the agent for shortening the growth period of a plant can also be used as an early budding agent for a plant, an early flowering agent for a plant, an early fruit-setting agent for a plant, an early fruiting agent for a plant, or an early harvesting agent for a plant. These effects can therefore reduce the cost of plant cultivation and save labor for plant cultivation to reduce environmental load.

The active component also equalizes the growth rate of the treated plants. In other words, the timing of budding, flowering, fruit setting, fruiting, and harvesting of plants grown under the same conditions is less shifted, and the plants are allowed to easily bud, flower, set fruit, fruit, and harvest at the same time. As a result, the active component causes the growth rates of plants growing in the same field to equalize, making it easier to align the harvest timing.

Note that, as described in Patent Document 3, the active component also has an effect of increasing the number of flowers and fruits of a plant and increasing the yield of seeds. Therefore, the active component has an effect of increasing the yield of the plant in addition to the effect of shortening the growth period of the plant.

According to the new findings of the present inventors, the compound represented by (I) or a tautomer thereof induces the expression of a flowering induction gene in a plant. Therefore, the compound represented by (I) or a tautomer thereof can also be used as an expression inducer for a flowering induction gene. It is considered that the effect of accelerating flowering of a plant by the active component is at least partially contributed by the action of inducing the expression of the flowering induction gene.

The flowering induction genes whose expression is induced are not particularly limited, and may be known genes such as CONSTANS (CO) genes, FLOWERING LOCUS T (FT) genes, SUPPRESSOR OF OVEREXPRESSION OF CONSTANS 1 (SOC1) genes, and LEAFY (LFY) genes in the case of Arabidopsis thaliana. Among them, the FT genes are preferred. These genes may have a mutation in the gene sequence (DNA sequence) depending on the plant species. For example, it is also possible to induce the expression of Hd3a genes of rice or SFT genes of tomato, which are genes homologous to the FT genes in species other than Arabidopsis thaliana. The flowering induction gene whose expression is induced can be a gene that encodes an amino acid sequence having a homology of 70% or more, preferably 90% or more, and more preferably 95% or more, to the amino acid sequence of a protein encoded by the FT gene (particularly, the FT gene of Arabidopsis thaliana). The flowering induction gene whose expression is induced may also be a gene consisting of a sequence having a homology of 90% or more, preferably 95% or more, and more preferably 99% or more, to the FT gene (particularly, the FT gene of Arabidopsis thaliana).

Depending on the plant species, the protein encoded by the FT gene has functions other than flowering induction, and for example, the FT gene of potato has not only a function of flowering induction but also a function of tuber induction. The function of the expression induction of the flowering induction gene is not limited to flowering induction.

The agent for shortening the growth period or the agent for equalizing the growth rate of a plant may be used for any plant treatment. Examples of the plant include: Poaceae such as rice, wheat, barley, rye(triticale), oats, corn, sorghum, sugar cane, turf, bentgrass, bermudagrass, fescue, and ryegrass; Legumes such as soybean, peanut, kidney bean, pea, adzuki bean, and alfalfa; Convolvulaceae such as sweet potato; Solanaceae such as capsicum, sweet pepper, tomato, eggplant, potato, and tobacco; Polygonaceae such as buckwheat; Asteraceae such as sunflower; Araliaceae such as ginseng; Brassicaceae such as rapeseed, broccoli, Chinese cabbage, turnip, cabbage, rucola, Japanese radish, and radish; Chenopodiaceae such as sugar beet; Malvaceae such as cotton; Rubiaceae such as coffee tree; Sterculiaceae such as cacao; Theaceae such as tea; Cucurbitaceae such as watermelon, melon, cucumber, and pumpkin; Liliaceae such as onion, leek, and garlic; Rosaceae such as strawberry, apple, almond, apricot, plum, yellow peach, Japanese plum, peach, and pear; Apiaceae such as carrot; Araceae such as taro; Anacardiaceae such as mango; Bromeliaceae such as pineapple; Caricaceae such as papaya; Ebenaceae such as persimmon; Ericaceae such as blueberry; Juglandaceae such as pecan; Musaceae such as banana; Oleaceae such as olive; Palmae such as coconut and date; Rutaceae such as mandarin orange, orange, grapefruit, and lemon; Vitaceae such as grape; flowers and ornamental plants; trees other than fruit trees; and other ornamental plants.

The plant may be any of wild plants, cultivars, plants and cultivars bred by known hybridization or plasmogamy, and genetically recombined plants and cultivars obtained by gene manipulation. Examples of the genetically recombined plants and cultivars obtained by gene manipulation include herbicide-resistant crops, pest-resistant crops in which an insecticidal proteinproducing gene is recombined, pathogen-resistant crops in which a pathogen resistance derivative-producing gene is recombined, taste-improved crops, yield-improved crops, preservation-improved crops, and yield-improved crops. Examples of the genetically recombined cultivars that have been approved in each country include various cultivars accumulated in the database of the International Service for the Acquisition of Agri-biotech Applications (ISAAA). Specific examples include ones including trade name such as AgriSure, AgriSure 3000 GT, AgriSure 3122 E-Z Refuge, AgriSure 3122 Refuge Renew, AgriSure Artesian 3030 A, AgriSure Artesian 3011 A, AgriSure Duracade, AgriSure Duracade 5222 E-Z Refuge, AgriSure GT, AgriSure GT/CB/LL, AgriSure RW, AgriSure Viptera 3110, AgriSure Viptera 3111, AgriSure Viptera 3220 E-Z Refuge, AgriSure Viptera 3220 Refuge Renew, BiteGard, Bollgard, Bollgard II, Bollgard II, Bollgard II/Roundup Ready, Bollgard 3 XtendFlex Cotton, Bollgard Cotton, Bollgard/Roundup Ready Cotton, B.t., B.t/BXN Cotton, B.t. Maize, BtXtra, BXN, BXN Canola, BXN Cotton, Clearfield, DroughtGard, Enlist, Enlist Cotton, Enlist WideStrike 3 Cotton, Genuity, Genuity Bollgard II XtendFlex, Genuity Intacta RR2 Pro, Genuity SmartStax, Genuity SmartStax RIB Complete, Genuity VT Double Pro, Genuity VT Double Pro RIB Complete, Genuity VT Triple Pro, Genuity VT Triple Pro RIB Complete, GlyTol, GlyTol Cotton, Herculex, Herculex 1, Herculex RW, Herculex XTRA, IMI, IMI Canola, InVigor, KnockOut, Liberty Link, Liberty Link Conola, Liberty Link cotton, NatureGard, Newleaf, Nucotn, Optimum, Optimum AcreMax, Optimum AcreMax I, Optimum AcreMax-R, Optimum AcreMax RW, Optimum AcreMax RW-R, Optimum AcreMax Xtra-R, Optimum AcreMax Xtreme-R, Optimum AcreMax Xtreme, Optimum Intrasect, Optimum Intrasect Xtra, Optimum Intrasect Xtreme, Optimum Leptra, Optimum TRIsect, Poast Compatible, Powercore, Powercore Corn, Powercore Corn Refuge Advanced, Protecta, Roundup Ready, Roundup Ready 2, Roundup Ready Conola, Roundup Ready Cotton, Roundup Ready Xtend, Roundup Ready/YieldGard, RR Flex/Bollgard II, SCS, SmartStax, SmartStax Refuge Advanced, StarLink, Twinlink, VipCot, VipCot Cotton, WideStrike, WideStrike 3, YieldGard, YieldGard Corn Borner, YieldGard Rootworm, YieldGard Plus, and YieldGard VT Triple.

### Other Components

The agent for shortening the growth period and the agent for equalizing the growth rate can be distributed in the market as formulations of various dosage forms that contain the active components as an active ingredient, and further contain other formulation aids or other active ingredients. The active component itself may be used as a formulation, or may be formulated in various dosage forms together with other formulation aids or other active ingredients. The dosage form is not particularly limited and may be selected depending on the treatment method or the like. Examples of the dosage form include a dustable powder, a granule, a dust-granule mixture, a wettable powder, a water soluble powder, an emulsifiable concentrate, a soluble concentrate, an oil miscible liquid/powder, an aerosol, a microcapsule suspension, a paste, a liniment, a smoke generator, a fumigant, and an ultra-low volume formulation.

### Formulation Aid

Examples of the formulation aid include a carrier, a surfactant, and other formulation aids. The carrier can improve solubility, water retention, water compatibility, oil absorption, and persistence of the effect on plants of the active component, thereby increasing the utilization efficiency of the active component, and improving handleability. In addition, the surfactant can enhance solubility, stability, dispersibility, emulsifiability, wettability, dilutability, drift reduction, adhesion to plants, penetration, absorption, and spreadability of the active component, and can enhance the efficiency of the active component on plants.

The carrier may be a solid carrier or liquid carrier.

Examples of the solid carrier include various powder carriers and granular carriers including: minerals such as clay, talc, diatomaceous earth, zeolite, montmorillonite, bentonite, kaolinite, kaolin, pyrophyllite, agalmatolite, acid clay, activated clay, attapulgite, attapulgus clay, limestone, calcite, marble, vermiculite, perlite, pumice, silica stone, silica sand, sericite, and porcelain stone; synthetic organic substances such as urea; salts such as calcium carbonate, sodium carbonate, magnesium carbonate, sodium sulfate, ammonium sulfate, potassium chloride, slaked lime, and baking soda; synthetic inorganic substances such as amorphous silica (e.g., white carbon and fumed silica) and titanium dioxide; plant carriers such as wood flour, corn stalk (cob), walnut shell (nut shell), fruit core, rice hull, coconut shell, sawdust, bran, soy flour, powdered cellulose, starch, dextrin, and sugars (e.g., lactose and sucrose); and various polymeric carriers such as crosslinked lignin, cation gel, gelatin gelated by heat or a polyvalent metal salt, water-soluble polymer gel (e.g., agar), chlorinated polyethylene, chlorinated polypropylene, polyvinyl acetate, polyvinyl chloride, ethylenevinyl acetate copolymers, and urea-aldehyde resins.

Examples of the liquid carrier include aliphatic solvents such as paraffins (normal paraffin, iso-paraffin, and naphthene); aromatic solvents such as xylene, alkylbenzene, alkylnaphthalene, and solvent naphtha; mixed solvents such as kerosene; machine oils such as refined high-boiling point aliphatic hydrocarbons; alcohols such as methanol, ethanol, isopropanol, butanol, and cyclohexanol; polyhydric alcohols such as ethylene glycol, diethylene glycol, propylene glycol, dipropylene glycol, hexylene glycol, polyethylene glycol, and polypropylene glycol; polyhydric alcohol derivatives such as propylene-based glycol ether; ketones such as acetone, acetophenone, cyclohexanone, methylcyclohexanone, and γ-butyrolactone; esters such as fatty acid methyl ester (coconut oil fatty acid methyl ester), ethylhexyl lactate, propylene carbonate, and dibasic acid methyl ester (succinic acid dimethyl ester, glutamic acid dimethyl ester, and adipic acid dimethyl ester); nitrogen-containing solvents such as N-alkylpyrrolidones and acetonitrile; sulfur-containing solvents such as dimethyl sulfoxide; oils and fats such as coconut oil, soybean oil, and rapeseed oil; amide-based solvents such as dimethylformamide, N,N-dimethyloctaneamide, N,N-dimethyldecaneamide, methyl 5-(dimethylamino)-2-methyl-5-oxo-valerate, and N-acylmorpholinebased solvents (e.g., CAS No. 887947-29-7); and water.

As the surfactant, various surfactants such as nonionic surfactants, anionic surfactants, cationic surfactants, amphoteric surfactants, silicone-based surfactants, fluorosurfactants, and biosurfactants can be used.

Examples of the nonionic surfactant include sorbitan fatty acid esters, polyoxyethylene sorbitan fatty acid esters, sucrose fatty acid esters, polyoxyethylene fatty acid esters, polyoxyethylene resin acid esters, polyoxyethylene fatty acid diesters, polyoxyethylene alkyl ethers, polyoxyethylene alkylphenyl ethers, polyoxyethylene dialkyl phenyl ethers, polyoxyethylene alkyl phenyl ether formalin condensates, polyoxyethylene/polyoxypropylene block polymers, alkyl polyoxyethylene/polyoxypropylene block polymer ethers, alkyl phenyl polyoxyethylene/polyoxypropylene block polymer ethers, polyoxyethylene alkylamines, polyoxyethylene fatty acid amides, polyoxyethylene fatty acid bisphenyl ethers, polyoxyethylene benzylphenyl (or phenylphenyl) ethers, polyoxyethylene styrylphenyl (or phenylphenyl) ethers, polyoxyethylene castor oils, polyoxyethylene hydrogenated castor oils, and alkyl glycosides.

Examples of the anionic surfactant include sulfates such as alkyl sulfates, polyoxyethylene alkyl ether sulfates, polyoxyethylene alkylphenyl ether sulfates, polyoxyethylene benzyl (or styryl) phenyl (or phenylphenyl) ether sulfates, and polyoxyethylene/polyoxypropylene block polymer sulfates; sulfonates such as paraffin (alkane) sulfonates, α-olefin sulfonates, dialkyl sulfosuccinates, alkylbenzene sulfonates, mono- or di-alkyl naphthalene sulfonates, naphthalene sulfonate-formalin condensates, alkyl diphenyl ether disulfonates, lignin sulfonates, polyoxyethylene alkyl phenyl ether sulfonates, and polyoxyethylene alkyl ether sulfosuccinic acid half esters; carboxylates such as fatty acids, resin acids, polycarboxylic acids, alkyl ether carboxylates, alkenyl succinic acids, N-acylamino acids, and naphthenic acids; and phosphates such as polyoxyethylene alkyl ether phosphates, polyoxyethylene mono- or di-alkyl phenyl ether phosphates, polyoxyethylene benzyl (or styryl) phenyl (or phenylphenyl) ether phosphates, polyoxyethylene/polyoxypropylene block polymer phosphates, and alkyl phosphates.

Examples of the cationic surfactant include salts of amines such as alkylamines and alkyl pentamethyl propylene diamine; and salts of ammoniums such as alkyltrimethylammonium, methyl polyoxyethylene alkylammonium, alkyl pyridinium, mono- or di-alkyl methylated ammonium, alkyl dimethyl benzalkonium, and benzethonium (octylphenoxyethoxyethyl dimethylbenzyl ammonium).

Examples of the amphoteric surfactant include dialkyldiamino ethyl betaines, alkyldimethyl benzyl betaines, and lecithins (e.g., phosphatidylcholine and phosphatidylethanolamine).

Examples of the silicone-based surfactant include trisiloxane ethoxylates.

Examples of the fluorosurfactant include perfluoroalkyl carboxylates, perfluoroalkyl sulfonates, and perfluoroalkyl trimethylammonium salts.

Examples of the biosurfactant include sophorolipids, rhamnolipids, trehalose lipids, mannosyl alditol lipids, cellobiose lipids, glucose lipids, oligosaccharide fatty acid esters, spiculisporic acids, corynomycolic acids, agaricic acids, surfactin, serrawettin, viscosin, lichenysin, arthrofactin, emulsan, and alasan.

Examples of the other formulation aids include inorganic salts used as pH adjusters (e.g., sodium and potassium); water-soluble salts such as common salt; xanthan gum, guar gum, carboxymethyl cellulose, polyvinylpyrrolidone, carboxyvinyl polymers, acrylic polymers, polyvinyl alcohols, starch derivatives, water-soluble polymers (e.g., polysaccharides), alginic acid and salts thereof, which are used as thickeners; metal stearates, sodium tripolyphosphate, and sodium hexametaphosphate, which are used as disintegrating dispersants; benzoic acid and salts thereof, sorbic acid and salts thereof, propionic acid and salts thereof, p-hydroxybenzoic acid, methyl p-hydroxybenzoate, and 1,2-benzothiazolin-3-one, which are used as preservatives; sodium polyphosphate, sodium polyacrylate, sodium ligninsulfonate, sodium citrate, sodium gluconate/glucoheptonate, ethylene diamine tetraacetic acid and disodium and ammonium salts thereof, which are used as sequesterants; pigments and dyes used as colorants; fluorine-based defoamers, silicone-based defoamers, and ethylene oxide/propylene oxide copolymers, which are used as defoamers; phenol-based antioxidants, amine-based antioxidants, sulfur-based antioxidants, and phosphoric acid-based antioxidants, which are used as antioxidants; salicylic acid-based UV absorbers and benzophenone-based UV absorbers, which are used as UV absorbers; quicklime and magnesium oxide, which are used as desiccants; and adjuvants and chemical damage reducers.

### Other Active Ingredients

Examples of the other active ingredients include active ingredients contained in biostimulants, plant growth regulators, fungicides, insecticides, miticides, nematicides, and herbicides. Note that when another biostimulant is used in combination with the agent for shortening the growth period or the agent for equalizing the growth rate, it is also possible to further enhance tolerance to various abiotic stresses or to enhance the growth promoting effect.

Examples of the biostimulants include seaweed extract, corn extract, microalgae, mycorrhizal fungus, humic acid, fulvic acid, oxidized glutathione, L-proline, glycine betaine, 5-aminolevulinic acid, 2-hexenal, trehalose, silicic acid, nicotinic acid, acetic acid, and ethanol.

Examples of the plant growth regulators include aminoethoxyvinylglycine, chlormequat, chlorpropham, cyclanilide, dikegulac, daminozide, ethephon, flurprimidol, flumetralin, forchlorfenuron, gibberellin, mepiquat chloride, methylcyclopropene, benzylaminopurine, paclobutrazol, prohexadione, thidiazuron, tributylphosphorotrithioate, trinexapac-ethyl, uniconazole, sodium 1-naphthaleneacetate, 1-naphthylacetamide, 1-methylcyclopropene, 4-chlorophenoxyacetic acid (4-CPA), ethyl 2-methyl-4-chlorophenoxybutyrate (MCPB), isoprothiolane, indolebutyric acid, ethychlozate, calcium formate, chlormequat, choline, cyanamide, dichlorprop, decyl alcohol, sorbitan trioleate, nicosulfuron, pyraflufen-ethyl, butralin, prohydrojasmon, anisifluprin, and pendimethalin.

Examples of the fungicides include nucleic acids metabolism inhibitors, fungicides acting on cytoskeleton and motor proteins, respiration inhibitors, amino acids and protein synthesis inhibitors, signal transduction inhibitors, lipid synthesis or transport/membrane integrity or function inhibitors, sterol biosynthesis in membranes inhibitors, cell wall biosynthesis inhibitors, melanin biosynthesis inhibitors, host plant defense inducers, chemical multi-site inhibitors, and biopesticides/agrochemicals of biological origin with multiple modes of action.

Specific examples of the nucleic acids metabolism inhibitors include benalaxyl, benalaxyl-M or kiralaxyl, furalaxyl, metalaxyl, metalaxyl-M or mefenoxam, ofurace, oxadixyl, bupirimate, dimethirimol, ethirimol, hymexazole, octhilinone, and oxolinic acid.

Examples of the fungicides acting on cytoskeleton and motor proteins include benomyl, carbendazim, fuberidazole, thiabendazole, thiophanate, thiophanate-methyl, diethofencarb, ethaboxam, pencycuron, zoxamide, fluopicolide, fluopimomide, phenamacril, metrafenone, and pyriofenone.

Examples of the respiration inhibitors include diflumetorim, fenazaquin, tolfenpyrad, benodanil, benzovindiflupyr, bixafen, boscalid, carboxin, fenfuram, flubeneteram, fluindapyr, fluopyram, flutolanil, fluxapyroxad, furametpyr, inpyrfluxam, isofetamid, isoflucypram, isopyrazam, mepronil, oxycarboxin, penflufen, penthiopyrad, pydiflumetofen, pyrapropoyne, pyraziflumid, sedaxane, thifluzamide, azoxystrobin, coumoxystrobin, dimoxystrobin, enestrobin, enoxastrobin, famoxadone, fenamidone, fenaminstrobin, flufenoxystrobin, fluoxastrobin, kresoxim-methyl, mandestrobin, metominostrobin, metyltetraprole, orysastrobin, picoxystrobin, pyraclostrobin, pyrametostrobin, pyraoxystrobin, pyribencarb, triclopyricarb, trifloxystrobin, amisulbrom, cyazofamid, fenpicoxamid, florylpicoxamid, metarylpicoxamid, binapacryl, dinocap, fluazinam, meptyldinocap, fentin acetate, fentin chloride, fentin hydroxide, silthiofam, and ametoctradin.

Examples of the amino acids and protein synthesis inhibitors include cyprodinil, mepanipyrim, pyrimethanil, blasticidin-S, kasugamycin, streptomycin, and oxytetracycline.

Examples of the signal transduction inhibitors include proquinazid, quinoxyfen, fludioxonil, chlozolinate, dimetachlone, fenpiclonil, iprodione, procymidone, and vinclozolin.

Examples of the lipid synthesis or transport/membrane integrity or function inhibitors include edifenphos (EDDP), iprobenfos (IBP), isoprothiolane, pyrazophos, biphenyl, chloroneb, dicloran (CNA), etridiazole, quintozene (PCNB), tecnazene (TCNB), tolclofos-methyl, iodocarb, propamocarb, prothiocarb, extracts of Melaleuca alternifolia (tea tree), plant oil mixtures (eugenol, geraniol, thymol), natamycin (pimaricin), fluoxapiprolin, and oxathiapiprolin.

Examples of the sterol biosynthesis in membranes inhibitors include azaconazole, bitertanol, bromuconazole, cyproconazole, difenoconazole, diniconazole, epoxiconazole, etaconazole, fenbuconazole, fluoxytioconazole, fluquinconazole, flusilazole, flutriafol, hexaconazole, imazalil, imibenconazole, ipconazole, ipfentrifluconazole, mefentrifluconazole, metconazole, myclobutanil, oxpoconazole, pefurazoate, penconazole, prochloraz, propiconazole, prothioconazole, simeconazole, tebuconazole, tetraconazole, triadimefon, triadimenol, triflumizole, triticonazole, fenarimol, nuarimol, pyrifenox, pyrisoxazole, triforine, methyl-(2RS)-2-[2-chloro-4-(4-chlorophenoxy)phenyl]-2-hydroxy-3-(1H-1,2,4-triazol-1-yl)propanoate, 1-((1H-1,2,4-triazol-1-yl)methyl)-5-(4-chlorobenzyl)-2-(chloromethyl)-2-methylcyclopentan-1-ol, methyl 2-((1H-1,2,4-triazol-1-yl)methyl)-3-(4-chlorobenzyl)-2-hydroxy-1-methylcyclopentane-1-carboxylate, aldimorph, dodemorph, fenpropimorph, tridemorph, fenpropidin, piperalin, spiroxamine, fenhexamid, fenpyrazamine, pyributicarb, naftifine, and terbinafine.

Examples of the cell wall biosynthesis inhibitors include polyoxin, benthiavalicarb (benthiavalicarb-isopropyl), dimethomorph, flumorph, iprovalicarb, mandipropamid, pyrimorph, and valifenalate.

Examples of the melanin synthesis inhibitors include fthalide, pyroquilon, tricyclazole, carpropamid, diclocymet, fenoxanil, and tolprocarb.

Examples of the host plant defense inducers include acibenzolar-S-methyl, probenazole, tiadinil, isotianil, laminarin, Reynoutria sachalinensis extracts, Bacillus mycoides isolate J, cell wall of Saccharomyces cerevisiae strain LAS117, fosetyl (fosetyl-aluminum, fosetyl potassium, fosetyl sodium), phosphorous acid and salts thereof, and dichlobentiazox.

Examples of the chemical multi-site inhibitor include ferbam, mancozeb, maneb, metiram, propineb, thiuram, zinc thiazole, zineb, ziram, amobam, anilazine, dithianon, dichlofluanid, tolylfluanid, guazatine, iminoctadine acetate, iminoctadine albesilate, copper or various copper salts (e.g., basic copper oxychloride, copper (II) hydroxide, copper hydroxide sulfate, copper sulfate, organocopper (oxine-copper), copper nonylphenolsulfonate, DBEDC), sulfur, captan, captafol, folpet, chlorothalonil (TPN), quinoxaline system (chinomethionat), fluoroimide, and methasulfocarb.

Examples of the biopesticides/agrochemicals of biological origin with multiple modes of action include Bacillus subtilis strain AFS032321, Bacillus amyloliquefaciens strain QST713, Bacillus amyloliquefaciens strain FZB24, Bacillus amyloliquefaciens strain MBI600, Bacillus amyloliquefaciens strain D747, Bacillus amyloliquefaciens strain F727, Clonostachys rosea strain CR-7, Gliocladium catenulatum strain J1446, Pseudomonas chlororaphis strain AFS009, Streptomyces griseoviridis strain K61, Streptomyces lydicus strain WYEC108, Trichoderma atroviride strain I-1237, Trichoderma atroviride strain LU132, Trichoderma atroviride strain SC1, Trichoderma asperellum strain T34, extracts from Swinglea glutinosa, and extracts from the cotyledons of lupine plantlets(BLAD) saplings.

Examples of other compounds for use in fungicides include chloroinconazide, seboctylamine, flumetylsulforim, flufenoxadiazam, galquin, fenopyramid, feneptamidoquin, bifemetstrobin, fluquinometoate, cyflufenamid, cymoxanil, diclomezine, dipymetitrone, dodine, fenitropan, ferimzone, flusulfamide, flutianil, harpin, inorganic salts (hydrogencarbonates (sodium hydrogencarbonate, potassium hydrogencarbonate), potassium carbonate), ipflufenoquin, KINOPROL, materials of biological origin, machine oils, organic oils, picarbutrazox, pyridachlometyl, quinofumelin, tebufloquin, tecloftalam (bactericides), triazoxide, validamycin, aminopyrifene, and shiitake mycelia extracts.

Examples of the insecticides include acetylcholinesterase (AChE) inhibitors, GABA-gated chloride channel blockers, sodium channel modulators, nicotinic acetylcholine receptor (nAChR) competitive modulators, nicotinic acetylcholine receptor (nAChR) allosteric modulators, glutamate-gated chloride channel (GluCl) allosteric modulators, juvenile hormone mimics, miscellaneous non-specific (multi-site) inhibitors, chordotonal organ TRPV channel modulators, mite growth inhibitors affecting CHS1, microbial disruptors of insect midgut membranes, inhibitors of mitochondrial ATP synthase, uncouplers of oxidative phosphorylation via disruption of proton gradient, nicotinic acetylcholine receptor (nAChR) channel blockers, inhibitors of chitin biosynthesis affecting CHS1, inhibitors of chitin biosynthesis (type 1), molting inhibitors (dipteran), molting hormone (ecdysone) receptor agonists, octopamine receptor agonists, mitochondrial complex III electron transport inhibitors, mitochondrial complex I electron transport inhibitors (METI), voltage-dependent sodium channel blockers, inhibitors of acetyl CoA carboxylase, mitochondrial complex IV electron transport inhibitors, mitochondrial complex II electron transport inhibitors, ryanodine receptor modulators, chordotonal organ modulators, GABA-gated chloride channel allosteric modulators, and baculoviruses.

Specifically, examples of the acetylcholinesterase (AChE) inhibitors include alanycarb, aldicarb, bendiocarb, benfuracarb, butocarboxim, butoxycarboxim, carbaryl (NAC), carbofuran, carbosulfan, ethiofencarb, fenobucarb (BPMC), fenothiocarb, formetanate, furathiocarb, isoprocarb (MIPC), methiocarb, methomyl, metolcarb (MTMC), oxamyl, pirimicarb, propoxur (PHC), thiodicarb, thiofanox, triazamate, trimethacarb, XMC, xylylcarb (MPMC), acephate, azamethiphos, azinphos-ethyl, azinphos-methyl, cadusafos, chlorethoxyfos, chlorfenvinphos (CVP), chlormephos, chlorpyrifos, chlorpyrifos-methyl, coumaphos, cyanophos (CYAP), demeton-S-methyl, diazinon, dichlorvos (DDVP), dicrotophos, dimethoate, dimethylvinphos, ethylthiomethon (disulfoton), EPN, ethion, ethoprophos, famphur, fenamiphos, fenitrothion (MEP), fenthion (MPP), fosthiazate, heptenophos, imicyafos, isofenphos, isopropyl O-(methoxyaminothiophosphoryl)salicylate, isoxathion, malathon (malathion), mecarbam, methamidophos, methidathion (DMTP), mevinphos, monocrotophos, naled (BRP), omethoate, oxydemeton-methyl, parathion, methyl parathion (parathion-methyl), phenthoate (PAP), phorate, phosalone, phosmet (PMP), phosphamidon, phoxim, pirimiphos-methyl, profenofos, propetamphos, prothiofos, pyraclofos, pyridaphenthion, quinalphos, sulfotep, tebupirimfos, temephos, terbufos, tetrachlorvinphos (CVMP), thiometon, triazophos, trichlorfon (DEP), and vamidothion.

Examples of the GABA-gated chloride channel blockers include chlordane, benzoepin (endosulfan), dienochlor, ethiprole, fipronil, pyriprole, and nicofluprole.

Examples of the sodium channel modulators include acrinathrin, allethrin (allethrin, d-cis-trans-, d-trans-isomers), bifenthrin, bioallethrin (bioallethrin, S-cyclopentenyl-isomers), bioresmethrin, chloroprallethrin, chlorfenson, cycloprothrin, cyfluthrin (cyfluthrin, β-isomers), cyhalothrin (cyhalothrin, λ-, γ-isomers), cypermethrin (cypermethrin, α-, β-, θ-, ζ-isomers), cyphenothrin [(1R)-trans-isomers], deltamethrin, dimefluthrin, empenthrin [(EZ)-(1R)-isomers], esfenvalerate, etofenprox, fenpropathrin, fenvalerate, flubrocythrinate, flucythrinate, flumethrin, fluvalinate (τ-fluvalinate), halfenprox, imiprothrin, kadethrine, metofluthrin, momfluorothrin, epsilon-metofluthrin, epsilon-momfluorothrin, permethrin, phenothrin [(1R)-trans isomer], prallethrin, profluthrin, pyrethrin, resmethrin, silafluofen, tefluthrin, phthalthrin (tetramethrin), tetramethrin [(1R)-isomers], tralomethrin, transfluthrin, DDT, methoxychlor, aldrin, dieldrin, and lindane (lindene).

Examples of the nicotinic acetylcholine receptor (nAChR) competitive modulators include acetamiprid, clothianidin, dinotefuran, imidacloprid, nitenpyram, thiacloprid, thiamethoxam, nicotine sulfate (nicotine), sulfoxaflor, flupyradifurone, dicloromezotiaz, fenmezoditiaz, and triflumezopyrim.

Examples of the nicotinic acetylcholine receptor (nAChR) allosteric modulators include spinetoram, spinosad, flupyrimin, and GS-omega/kappa HXTX-Hv1a peptide.

Examples of the glutamate-gated chloride channel (GluCl) allosteric modulators include abamectin, emamectin benzoate, lepimectin, and milbemectin.

Examples of the juvenile hormone mimics include hydroprene, kinoprene, methoprene, fenoxycarb, and pyriproxyfen.

Examples of the miscellaneous non-specific (multi-site) inhibitors include methyl bromide, other alkyl halides, chloropicrin, sodium aluminum fluoride, sulfuryl fluoride, borax, boric acid, disodium octaborate, sodium metaborate, tartar emetic, dazomet, carbam (metam-ammonium), metamsodium (carbam sodium), and methyl isothiocyanate.

Examples of the chordotonal organ TRPV channel modulators include pymetrozine, pyrifluquinazon, and afidopyropen.

Examples of the mite growth inhibitors affecting CHS1 include clofentezine, diflovidazin, hexythiazox, and etoxazole.

Examples of the microbial disruptors of insect midgut membranes include Bacillus thuringiensis subsp. israelensis, Bacillus thuringiensis subsp. aizawai, Bacillus thuringiensis subsp. kurstaki, Bacillus thuringiensis subsp. tenebrionis, proteins contained in B.t. crops (Cry1Ab, Cry1Ac, Cry1Fa, Cry1A. 105, Cry2Ab, Vip3A, mCry3A, Cry3Bb, and Cry34Ab1/Cry35Ab1), and Bacillus sphaericus.

Examples of the inhibitors of mitochondrial ATP synthase include diafenthiuron, azocyclotin, tricyclohexyltin hydroxide (cyhexatin), fenbutatin oxide, propargite (BPPS), and tetradifon.

Examples of the uncouplers of oxidative phosphorylation via disruption of proton gradient include chlorfenapyr, DNOC, and sulfluramid.

Examples of the nicotinic acetylcholine receptor (nAChR) channel blockers include bensultap, cartap hydrochloride, thiocyclam, thiosultap sodium, and monosultap.

Examples of the inhibitors of chitin biosynthesis affecting CHS1 include bistrifluron, chlorfluazuron, diflubenzuron, flucycloxuron, flufenoxuron, hexaflumuron, lufenuron, novaluron, noviflumuron, teflubenzuron, and triflumuron.

Examples of the inhibitors of chitin biosynthesis (type 1) include buprofezin.

Examples of the molting inhibitors (dipteran) include cyromazine.

Examples of the molting hormone (ecdysone) receptor agonists include chromafenozide, halofenozide, methoxyfenozide, and tebufenozide.

Examples of the octopamine receptor agonists include amitraz.

Examples of the mitochondrial complex III electron transport inhibitors include hydramethylnon, acequinocyl, fluacrypyrim, flupyroxystrobin, and bifenazate.

Examples of the mitochondrial complex I electron transport inhibitors (METI) include fenazaquin, fenpyroximate, pyridaben, pyrimidifen, tebufenpyrad, tolfenpyrad, and derris (rotenone).

Examples of the voltage-dependent sodium channel blockers include indoxacarb and metaflumizone.

Examples of the inhibitors of acetyl CoA carboxylase include spirodiclofen, spiromesifen, spiropidion, spidoxamat, spirobudifen, and spirotetramat.

Examples of the mitochondrial complex IV electron transport inhibitors include aluminum phosphide, calcium phosphide, phosphine, zinc phosphide, prussic acid (calcium cyanide, sodium cyanide), and potassium cyanide.

Examples of the mitochondrial complex II electron transport inhibitors include cyenopyrafen, cyetpyrafen, cyflumetofen, pyflubumide, and cyclobutrifluram.

Examples of the ryanodine receptor modulators include chlorantraniliprole, cyantraniliprole, cyclaniliprole, flubendiamide, tetraniliprole, fluchlordiniliprole, thiorantraniliprole, pioxaniliprole, tetrachlorantraniliprole, cyhalodiamide, and cyproflanilide.

Examples of the chordotonal organ modulators include flonicamid.

Examples of the GABA-gated chloride channel allosteric modulators include broflanilide, fluxametamide, and isocycloseram.

Examples of the baculoviruses include codling moth (Cydia pomonella GV), false codling moth (Thaumatotibia leucotreta GV), velvetbean caterpillar (Anticarsia gemmatalis MNPV), and cotton bollworm (Helicoverpa armigera NPV).

Examples of other insecticides, miticides, and nematicides include azadirachtin, benzomate (benzoximate), phenisobromolate (bromopropylate), quinoxaline system (chinomethionate), Kelthane (dicofol), lime sulfur, mancozeb, pyridalyl, sulfur, acynonapyr, amidoflumet, benzpyrimoxan, fluazaindolizine, fluensulfone, fluhexafon, flupentiofenox, flometoquin, metaldehyde, tyclopyrazoflor, dimpropyridaz, trifluenfuronate, indazapyroxamet, sulfiflumin, bisulffluen, isoflualanum, piperflanilide, cybenzoxasulfyl, galquin, vadescana, tiapyrachlor, bentioflumin, flumetnicam, sulfoxamyl, bacteria belonging to the genus Burkholderia, Wolbachia pipientis (Zap), Chenopodium ambrosioides extracts, fatty acid monoesters with glycerol or propanediol, neem oils, machine oils, rapeseed oils, blended oils, starch, saccharified reduced starch, sodium oleate, iron (III) phosphate, nemadectin, Beauveria bassiana strains, Metarhizium anisopliae strain (F52), Paecilomyces fumosoroseus Apopka strain (97), diatomaceous earth, dichlorodiisopropyl ether (DCIP), 1,3-dichloropropene (D-D), levamisole hydrochloride, morantel tartrate, and tioxazafen.

Examples of the herbicides include acetolactate synthase (ALS) inhibitor compounds, amino acid-based compounds, cyclohexanedione-based compounds, acetamide-based compounds, bipyridinium-based compounds, allyloxyphenoxypropionic acid-based compounds, carbamate-based compounds, pyridine-based compounds, urea-based compounds, dinitroaniline-based compounds, protoporphyrinogen oxidase (PPO) inhibitor compounds, phenoxyacetic acid-based compounds, hydroxyphenylpyruvate dioxygenase enzyme (HPPD) inhibitor compounds, and triazine-based compounds.

Specific examples of the acetolactate synthase (ALS) inhibitor compounds include imazamethabenz and imazamethabenz-methyl, imazamox, imazapic, imazapyr, imazaquin, imazethapyr, amidosulfuron, azimsulfuron, bensulfuron and bensulfuron-methyl, chlorimuron and chlorimuron-methyl, chlorimuron-ethyl, chlorsulfuron, cinosulfuron, cyclosulfamuron, ethametsulfuron and ethametsulfuron-methyl, ethoxysulfuron, flazasulfuron, flucetosulfuron, flupyrsulfuron, flupyrsulfuron-methyl and salts thereof, foramsulfuron, halosulfuron, halosulfuron-methyl, imazosulfuron, iodosulfuron and salts thereof, iodosulfuron-methyl and salts thereof, mesosulfuron, mesosulfuron-methyl, metazosulfuron, metsulfuron, metsulfuron-methyl, nicosulfuron, oxasulfuron, primisulfuron, primisulfuron-methyl, propyrisulfuron, prosulfuron, pyrazosulfuron, pyrazosulfuron-ethyl, rimsulfuron, sulfometuron, sulfometuron-methyl, sulfosulfuron, thifensulfuron, thifensulfuron-methyl, triasulfuron, tribenuron, tribenuron-methyl, trifloxysulfuron and salts thereof, triflusulfuron, triflusulfuron-methyl, tritosulfuron, imizamethabenz-methyl, bispyribac-sodium, cloransulam, cloransulam-methyl, diclosulam, florasulam, flucarbazone and salts thereof, flumetsulam, metosulam, orthosulfamuron, penoxsulam, pyroxsulam, propoxycarbazone and salts thereof, pyribenzoxim, pyriftalid, pyriminobac-methyl, pyrimisulfan, pyrithiobac and salts thereof, pyroxsulam, thiencarbazone, thiencarbazone-methyl, and triafamone.

Examples of the amino acid-based compounds include bialaphos and salts thereof, glufosinate and salts thereof, glufosinate P and salts thereof, and glyphosate and salts thereof.

Examples of the cyclohexanedione-based compounds include alloxydim, butroxydim, clethodim, cloproxydim, cycloxydim, profoxydim, sethoxydim, tepraloxydim, tralkoxydim, and feproxydim.

Examples of the acetamide-based compounds include napropamide, dimethachlor, pethoxamid, acetochlor, alachlor, allidochlor (CDAA), butenachlor, delachlor, diethatyl-ethyl, propisochlor, prynachlor, butachlor, dimethenamid, dimethenamid-P, metazachlor, metolachlor, S-metolachlor, pretilachlor, propachlor, thenylchlor, flufenacet, and mefenacet.

Examples of the bipyridinium-based compounds include cyperquat, morfamquat, diquat, and paraquat.

Examples of the allyloxyphenoxypropionic acid-based compounds include clodinafop, clodinafop-propargyl, clofop, cyhalofop-butyl, diclofop, diclofop-methyl, diclofop-P-methyl, fenoxaprop, fenoxaprop-ethyl, fenoxaprop-P-ethyl, fluazifop, fluazifop-butyl, fluazifop-P-butyl, haloxyfop, haloxyfopmethyl, haloxyfop-P-methyl, isoxapyripop, metamifop, propaquizafop, quizalofop, quizalofop-ethyl, quizalofop-P-ethyl, and quizalofop-P-tefuryl.

Examples of the carbamate-based compounds include asulam, carbetamide, desmedipham, chlorprocarb, phenisopham, cycloate, dimepiperate, pebulate, tiocarbazil, vernolate, barban, chlorbufam, chlorpropham, propham, swep, phenmedipham, butylate, EPTC, esprocarb, molinate, orbencarb, prosulfocarb, pyributicarb, thiobencarb (benthiocarb), and tri-allate.

Examples of the pyridine-based compounds include aminopyralid, clopyralid, diflufenican, dithiopyr, fluridone, fluroxypyr, halauxifen, florpyrauxifen, picloram and salts thereof, picolinafen, thiazopyr, and triclopyr and salts thereof.

Examples of the urea-based compounds include benzothiazolone, bromuron, buturon, chlorbromuron, chloroxuron, difenoxuron, dimefuron, ethidimuron, fenuron, fluothiuron, metobenzuron, metobromuron, metoxuron, monolinuron, monuron (CMU), neburon, parafluron, siduron, thiazafluron, chlorotoluron, dymron, diuron (DCMU), fluometuron, isoproturon, linuron, methabenzthiazuron, tebuthiuron, cumyluron, karbutilate, and isouron.

Examples of the dinitroaniline-based compounds include benfluralin (bethrodine), butralin, dinitramine, ethalfluralin, fluchloralin, isopropalin, nitralin, profluralin, oryzalin, pendimethalin, prodiamine, and trifluralin.

Examples of the protoporphyrinogen oxidase (PPO) inhibitor compounds include acifluorfen, aclonifen, azafenidin, bifenox, chlomethoxynil, ethoxyfen, ethoxyfen-ethyl, fomesafen, fluazolate, fluoroglycofen, fluoroglycofen-ethyl, halosafen, lactofen, oxyfluorfen, butafenacil, epyrifenacil, chlornitrofen (CNP), fluorodifen, fluoronitrofen (CFNP), nitrofen (NIP), oxyfluorfen, chlorphthalim, flumipropyn, carfentrazone, carfentrazone-ethyl, cinidon-ethyl, flumiclorac-pentyl, flumioxazin, fluthiacet, fluthiacet-methyl, oxadiargyl, oxadiazon, pentoxazone, pyraclonil, pyraflufen, pyraflufen-ethyl, saflufenacil, sulfentrazone, thidiazimin, benzfendizone, profluazol, and flufenpyr-ethyl.

Examples of the phenoxyacetic acid-based compounds include 2,4,5-T, 2,4-D and salts thereof, 2,4-DB and salts thereof, clomeprop, dichlorprop, fenoprop, MCPA and salts thereof, MCPB and salts thereof, mecoprop (MCPP) and salts thereof, and mecoprop-P and salts thereof.

Examples of the hydroxyphenylpyruvate dioxygenase (HPPD) inhibitor compounds include benzobicyclon, benzofenap, bicyclopyrone, isoxaflutol, mesotrione, pyrasulfotol, pyrazolynate (pyrazolate), pyrazoxyfen, sulcotrione, tefuryltrione, tembotrione, topramezone, fenquinotrione, and tolpyralate.

Examples of the triazine-based compound include atraton, aziprotryn, chlorazine, cyprazine, desmetryn, dipropetryn, eglinazine-ethyl, ipazine, methoprotryne, procyazine, proglinazine, prometon, propazine, sebuthylazine, secbumeton, terbumeton, trietazine, ametryn, atrazine, cyanazine, dimethametryn, hexazinone, indaziflam, metamitron, metribuzin, prometryn, simazine (CAT), simetryn, terbuthylazine, terbutryn, and triaziflam.

Examples of the other herbicides include amicarbazone, ethiozin, isomethiozin, aminocyclopyrachlor, aminotriazole, anilofos, piperophos, beflubutamid, benazolin, benfuresate, bentazone, bromacil, isocil, bromobutide, bromofenoxim, bromoxynil, butamifos, DMPA, chlorthal-dimethyl (TCTP), cafenstrole, chloridazon (PAC), brompyrazon, chlorthal, clomazone, cumyluron, dicamba (MDBA) and salts thereof, chloramben, 2,3,8-TBA (TCBA), benazolin-ethyl, chlorfenac, chlorfenprop, dichlobenil (DBN), chlorthiamid (DCBN), cinmethylin, methiozolin, amitrol, flamprop-M, fosamine, methyldymron, monalide, MSMA, difenzoquat, diflufenzopyr, endothall and salts thereof, ethofumesate, etobenzanid, fenoxasulfone, fentrazamide, flupoxam, fluorochloridone, flurtamone, indanofan, tridiphane, ioxynil, ipfencarbazone, isoxaben, triaziflam, lenacil, methylarsonic acid, naptalam, flurochloridone, norflurazon, oxaziclomefone, pinoxaden, chloranocryl=dicryl, pentanochlor (CMMP), propanil, propyzamide, pyridate, pyroxasulfone, promacyl, quinclorac, quinmerac, quinoclamine, terbacil, cyclopyrimorate, florpyrauxifen-benzyl, lancotrione and salts thereof, cyclopyranil, bixlozone, tetflupyrolimet, dimesulfazet, dinosam, dinoseb (DNBP), DNOC, dinoterb, etinofen, medinoterb, DSMA, cacodylic acid, diphenamid, naproanilide, tebutam, bensulide, dalapon, TCA, mefluidide, pefluidone, CAMA, tiafenacil, trifludimoxazin, rimisoxafen, fenpyrazone, dioxopyritrione, cypyrafluone, bipyrazone, benquitrione, fluchloraminopyr, pyriflubenzoxim, flufenoximacil, iptriazopyrid, flusulfinam, broclozone, indolauxypyr, icafolin, pyraquinate, metproxybicyclone, tetrapion (flupropanate) and salts thereof, and d-limonene.

### Content

The content of the active component in the formulation can be arbitrarily determined depending on the dosage form, the amount to be used for treatment in a plant, and the like. For example, the formulation preferably contains the active component at an amount 0.01 mass% or more and 90 mass% or less, and more preferably 0.1 mass% or more and 50 wt.% or less, based on the total mass of the formulation.

The formulation may be used as the treatment agent as it is, or may be used as the treatment agent prepared by, for example, arbitrarily mixing it with the above-mentioned formulation aids or other active ingredients. Note that when the other active ingredient is mixed, a formulation containing the other active ingredient may be mixed with the formulation containing the above-mentioned active component to prepare the treatment agent.

### Production Method

The agent for shortening the growth period or the agent for equalizing the growth rate can be prepared by a conventional method using the active component. At the time, a solid carrier or a liquid carrier may be used to prepare the formulation having a predetermined dosage form. Note that, as the active component, an extract from a microorganism that produces the active component may be used. Further, an extract from a microorganism that produces the active component may be used as an agent for shortening the growth period or an agent for equalizing the growth rate. The active component or the extract from a microorganism that produces the active component may be added to an extract of another microorganism, a plant, a seaweed, or the like. By using an extract from a microorganism that produces the active component or an extract of a microorganism, a plant or a seaweed to which the active component is added, the action of the components contained in the extract other than the active component is obtained, or the effect of enhancing the absorption of the active component into the plant is obtained, whereby the effect of the active component can be obtained at a lower concentration.

Note that the active component may be stored and transported in a mixed state, or the component may be stored in a first container and another active ingredient may be stored in a second container to be stored and transported in a separate and independent state in which the component and the active ingredient are not mixed. In addition, the first container containing the active component and the second container containing another active ingredient may be packaged (kitted) as a product.

### Method for Shortening Growth Period of Plant

The agent for shortening the growth period, the agent for equalizing the growth rate, or the formulation containing the same can be used for shortening the growth period of a plant by treating the plant prepared in advance with it.

The method of treatment is not particularly limited, and treatment may be performed by any method such as foliar application (foliar surface application), mixing into irrigation water, treatment of soil, injection to subsoil using an injector, treatment of a propagule (e.g., seed, bulb, and tuber), or direct application to a plant. These treatment methods can be selected depending on the effect to be obtained. For example, the FT protein formed by expression of the FT gene (and genes homologous thereto) is synthesized in leaves. Therefore, when it is desired to promote the induction of the FT gene (and genes homologous thereto), foliar surface application is preferred.

When it is mixed into irrigation water, water for irrigation of a plant or paddy water of a paddy field, for example, can be treated with the formulation or treatment agent. The root may be immersed (e.g., dipped) in the formulation or a diluted solution thereof during raising seedlings. For example, the concentration of the active component contained in water used for irrigation or immersion of plants, or water of a paddy field may be 0.01 mg/L or more and 100 g/L or less, preferably 0.1 mg/L or more and 10 g/L or less, and more preferably 1 mg/L or more and 1 g/L or less. When treatment is performed to paddy water, the amount of the active component to be used for treatment can be 0.1 g or more and 1000 g or less, and is preferably 1 g or more and 100 g or less, per 10 a of paddy field.

When foliar application or treatment of soil is performed, for example, a planting hole or its periphery is treated with a granule or the like at the time of seedling transplantation or the like, or a plant body including a seed or the like, or soil around the plant body may be treated with the formulation or treatment agent. Also, after the treatment of soil, the soil and the formulation may be stirred. For example, the concentration of the active component when foliar application or treatment of the soil surface is performed can be 0.01 mg/L or more and 100 g/L or less, preferably 0.1 mg/L or more and 10 g/L or less, and more preferably 1 mg/L or more and 1 g/L or less. In addition, the amount of the active component to be used for treatment when foliar application or treatment of the soil surface is performed can be 0.1 mg or more and 1000 mg or less, and is preferably 1 mg or more and 100 mg or less, per 1 m² of an agricultural or horticultural field.

When the propagule is treated, for example, the propagule is mixed with a dustable powder or a wettable powder and stirred, or the propagule is immersed in a diluted wettable powder or the like. The propagule may also be coated with the formulation containing a carrier. The amount of the active component used at the time of treating the propagule can be 0.005 g or more, and is preferably 0.05 g or more, per 100 kg of seeds.

When the growth period of the plant is shortened, or the growth rate of the plant is equalized, the treatment agent may be used for treatment of the propagule, may be used immediately after germination, or may be used during the vegetative growth period.

The treated plant can be grown under normal conditions for growing the plant. The plant thus grown may be further grown by transplanting a transplanting seedling grown to a certain extent into another soil or medium.

### Other Embodiments

Note that the aforementioned embodiments are exemplary embodiment of the present invention, and the present invention may include embodiments other than the aforementioned embodiments within the scope of its core technical concept.

### EXAMPLES

The present invention will be described in detail with reference to Examples, but the present invention is not limited to these Examples.

### Experiment 1

A treatment agent was prepared so that the L-form of ergothioneine (EGT) had the concentration below. A commercially available EGT was used, and pure water was used as a solvent.

In a pot having a diameter of 65 mm, 90 mL of seedling raising soil (available from TAKII & CO., LTD.) was placed, and tomato (Regina) seeds were sown to grow one tomato plant per pot. The cultivation conditions were set to a 16-hour light and 8-hour dark cycle in a growth chamber set at a room temperature of 22°C, with a light intensity of 5000 lx in the central part under fluorescent lamp irradiation. Bottom-watering was performed for irrigation.

After 28 days from sowing, the tomato seedlings were transplanted into pots with a diameter of 135 mm, filled with 900 g of seedling raising soil (available from TAKII & CO., LTD.), and further grown in a greenhouse set at a room temperature of 25°C. The number of days from sowing to flowering (number of days to flowering) and the number of days from sowing to fruit setting (number of days to fruit setting) were then recorded.

To the tomato seedlings grown in the growth chamber, 50 mL of 0.1 mM or 0.5 mM treatment agent was supplied in place of water, by bottom-watering after 22 days and 25 days from sowing. These were designated as treated groups 1-1 and 1-2, respectively.

The tomatoes were transplanted after 28 days from sowing, and 50 mL of 0.5 mM treatment agent was applied by soil drenching around the tomato roots after 33 days, 35 days, and 37 days from sowing, and this was designated as treated group 1-3.

In addition to the same treatment as in the treated group 3, 50 mL of a treatment agent having an EGT concentration of 0.5 mM was applied by soil drenching around the tomato roots after 39 days, 41 days, and 43 days from sowing, and this was designated as treated group 1-4.

The respective number of days to flowering and number of days to fruit setting are presented in Table 1. Note that "control group 1" presented in Table 1 is a control group that has not been treated with the treatment agent, and "treated group 1-1" to "treated group 1-4" are treated groups that have been treated with the treatment agent. The numerical values for each evaluation item are the average value and standard deviation (SD) based on the number of test plants.

**[Table 1]**

| | Treatment method | Number of test plants | Number of days to flowering | | Number of days to fruit setting | |
|---|---|---|---|---|---|---|
| | | | day | SD | day | SD |
| Control group 1 | | 7 | 62 | 6 | 76 | 5 |
| Treated group 1-1 | Bottom-watering | 6 | 57 | 2 | 68 | 2 |
| Treated group 1-2 | Bottom-watering | 6 | 57 | 1 | 70 | 2 |
| Treated group 1-3 | Soil drenching | 6 | 58 | 2 | 70 | 3 |
| Treated group 1-4 | Soil drenching | 6 | 59 | 2 | 74 | 2 |

As presented in Table 1, the periods until flowering and fruit setting were shortened in the plants treated with the treatment agent containing the active component, which is the compound represented by Formula (I), both when mixing it into the water supply and when the treatment was performed in the soil. In addition, the periods until flowering and fruit setting were equalized in the plants treated with the treatment agent containing the active component, which is the compound represented by Formula (I).

### Experiment 2

L-form and D-form of ergothioneion (EGT) were prepared, and a treatment agent was prepared so that each of the L-form and the D-form had the concentration below. A commercially available EGT was used, and pure water was used as a solvent.

In a plastic pot having a diameter of 60 mm and a height of 55 mm, 45 mL of seedling raising soil (available from TAKII & CO., LTD.) and 45 mL of vermiculite were mixed and placed, and one Arabidopsis thaliana (Col-0) plant was sown per pot. Plastic deep dishes each having a diameter of 160 mm and a height of 28 mm were prepared, and six pots were respectively placed therein. They were placed in a growth chamber set at a room temperature of 22°C with a 16-hour light and 8-hour dark cycle. The light conditions were set such that the light intensity was 5000 lx in the central part under fluorescent lamp irradiation. Bottom-watering was performed for irrigation, and the water level was set at about 5 mm.

On day 8, day 10, day 12, and day 14 after sowing, 50 mL of 0.1 mM treatment agent was supplied in place of water, by bottom-watering.

The respective number of days to flowering are presented in Table 2.

**[Table 2]**

| | Number of days to flowering |
|---|---|
| L-form | 48 |
| D-form | 41 |

As presented in Table 2, the D-form had a higher effect of shortening the growth period than the L-form.

### Experiment 3

A treatment agent was prepared so that the L-form of ergothioneine (EGT) had the concentration below. A commercially available EGT was used, and pure water was used as a solvent.

In a plastic pot having a diameter of 60 mm and a height of 55 mm, granular soil (Kumiai horticultural soil) and vermiculite were mixed in a volume ratio of 3:1 and placed, and one Arabidopsis thaliana (Col-0) plant was sown per pot. Plastic deep dishes each having a diameter of 160 mm and a height of 28 mm were prepared, and six pots were respectively placed therein. They were placed in a thermostatic chamber set at a room temperature of 22°C with a 16-hour light and 8-hour dark cycle. The light conditions were set such that the light intensity was 5000 lx in the central part under fluorescent lamp irradiation. Bottom-watering was performed for irrigation, and the water level was set at about 5 mm.

After eight days from sowing, 50 mL of 1 mM treatment agent was supplied in place of water, by bottom-watering. Note that the group in which water was used in place of the aqueous solution of ergothioneine was designated as an untreated control group.

On day 20 after sowing, Arabidopsis thaliana was frozen with liquid nitrogen, total RNA was then extracted using NucleoSpin RNA Plant (Takara Bio Inc.), and transcriptome analysis was performed using Arabidopsis microarray Ver. 4.0 (Agilent Technologies, Inc.). The amount of the transcription product of the FT gene was increased 2.4 times in the Arabidopsis thaliana treated with EGT as compared with the untreated control. Based on this result, it is considered that EGT induced the expression of the FT gene, thereby promoting flowering.

### Experiment 4

A treatment agent was prepared so that the L-form of ergothioneine (EGT) had a concentration of 4 mg/L or 30 mg/L. An extract derived from a microorganism that had been cultured and produced was used as EGT, and pure water was used as a solvent. Treatment agent 1 was applied by soil drenching, and treatment agents 2 and 3 were applied by foliar surface application. Treatment agent 3 was prepared by adding polysorbate 20 to treatment agent 2 to obtain a 100 ppm.

In a pot having a diameter of 60 mm, 90 mL of seedling raising soil (available from TAKII & CO., LTD.) was placed, and cherry tomato (Chika) seeds were sown to grow one cherry tomato per pot. The plants were grown under the cultivation conditions in a greenhouse set at a room temperature of 25°C, and bottom-watering was performed for irrigation.

After 14 days from sowing, the tomato seedlings were transplanted into pots with a diameter of 210 mm, filled with 1000 g of seedling raising soil (available from TAKII & CO., LTD.), and further grown in a greenhouse set at a room temperature of 25°C. Then, the number of days from sowing to budding (the number of days to budding) was recorded for the buds that had emerged after completion of the EGT treatment.

For the tomatoes grown in the greenhouse, 4 mg/L of the treatment agent 1 was applied by soil drenching after 18 days, 25 days, 33 days, and 40 days from sowing at 25 mL/plant, and this was designated as treated group 4-1.

For the tomatoes grown in the greenhouse, 30 mg/L of the treatment agent 2 was applied by foliar surface application after 18 days, 25 days, 33 days, and 40 days from sowing at 1000 L/ha, and this was designated as treated group 4-2.

For the tomatoes grown in the greenhouse, 30 mg/L of the treatment agent 3 was applied by foliar surface application after 18 days, 25 days, 33 days, and 40 days from sowing at 1000 L/ha, and this was designated as treated group 4-3.

The respective numbers of days to budding are presented in Table 3. Note that "control group 4" presented in Table 3 is a control group that has not been treated with the treatment agent, and "treated group 4-1" to "treated group 4-3" are treated groups that have been treated with the treatment agent. The numerical values for each evaluation item are the average value and standard deviation (SD) based on the number of test plants.

**[Table 3]**

| | Treatment method | Number of test plants | Number of days to budding | |
|---|---|---|---|---|
| | | | day | SD |
| Control group 4 | No | 9 | 41 | 4.1 |
| Treated group 4-1 | Soil drenching | 9 | 38 | 1.3 |
| Treated group 4-2 | Foliar surface application | 9 | 38 | 0.0 |
| Treated group 4-3 | Foliar surface application | 9 | 38 | 1.3 |

As presented in Table 3, the periods until budding were shortened in the plants treated with each treatment agent containing the active component, which is the compound represented by Formula (I). In addition, the periods until budding were equalized in the plants treated with the treatment agent containing the active component, which is the compound represented by Formula (I).

This application claims the priority from Japanese Patent Application No. 2023-220982, filed on December 27, 2023. The original description and the items disclosed in the scope of claims of that application are hereby incorporated by reference into the present application.

### INDUSTRIAL APPLICABILITY

According to the present invention, the growth period of plants can be shortened, and the cost of plant cultivation can be reduced.

## Claims

1. An agent for shortening a growth period of a plant, the agent comprising an active component, the active component being a compound represented by Formula (I) below or a tautomer thereof, or an agronomically acceptable salt thereof: 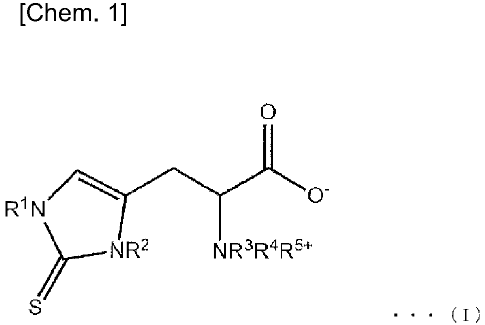
wherein in Formula (I), R¹ and R² each independently represent a hydrogen atom or an alkyl group having from 1 to 4 carbons, and
R³, R⁴, and R⁵ each independently represent an alkyl group having from 1 to 4 carbons.

2. The agent for shortening a growth period of a plant according to claim 1, wherein the compound represented by Formula (I) is ergothioneine.

3. The agent for shortening a growth period of a plant according to claim 2, wherein the ergothioneine comprises D-ergothioneine.

4. The agent for shortening a growth period of a plant according to claim 1, wherein the agent is an early flowering agent.

5. The agent for shortening a growth period of a plant according to claim 1, wherein the agent is an early fruit-setting agent.

6. The agent for shortening a growth period of a plant according to claim 1, wherein the agent induces an expression of a flowering induction gene in a treated plant.

7. An expression inducer for a flowering induction gene, the expression inducer comprising an active component, the active component being a compound represented by Formula (I) below or a tautomer thereof, or an agronomically acceptable salt thereof:

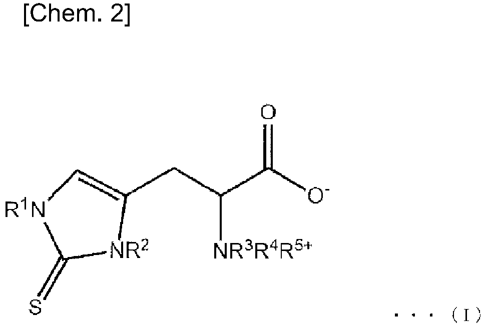

8. A formulation for shortening a growth period of a plant, the formulation comprising an active component, the active component being a compound represented by Formula (I) below or a tautomer thereof, or an agronomically acceptable salt thereof: 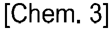 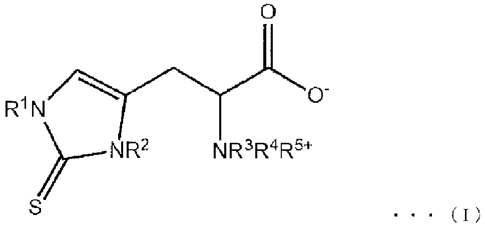
wherein in Formula (I), R¹ and R² each independently represent a hydrogen atom or an alkyl group having from 1 to 4 carbons, and
R³, R⁴, and R⁵ each independently represent an alkyl group having from 1 to 4 carbons.

9. A method for shortening a growth period of a plant, the method comprising treating a plant with a treatment agent containing the formulation described in claim 8.

10. The method for shortening a growth period of a plant according to claim 9, wherein treatment with the treatment agent causes early flowering of the plant.

11. The method for shortening a growth period of a plant according to claim 9, wherein treatment with the treatment agent causes early fruit setting of the plant.

12. A plant body, which is treated with a treatment agent containing the formulation described in claim 8 and has a shortened growth period.

13. The plant body according to claim 12, wherein the plant body is a propagule or a transplanting seedling.

14. The plant body according to claim 12, wherein the plant body is a tomato.

15. An agent for equalizing a growth rate of a plant, the agent comprising an active component, the active component being a compound represented by Formula (I) below or a tautomer thereof, or an agronomically acceptable salt thereof: 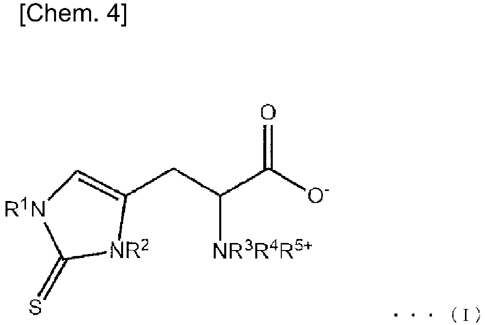
wherein in Formula (I), R¹ and R² each independently represent a hydrogen atom or an alkyl group having from 1 to 4 carbons, and
R³, R⁴, and R⁵ each independently represent an alkyl group having from 1 to 4 carbons.

16. A method for equalizing a growth rate of a plant, the method comprising treating a plant with a treatment agent comprising a formulation containing an active component, the active component being a compound represented by Formula (I) below or a tautomer thereof, or an agronomically acceptable salt thereof: 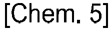 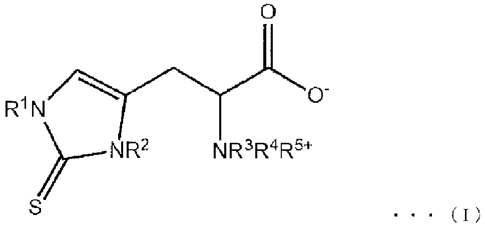
wherein in Formula (I), R¹ and R² each independently represent a hydrogen atom or an alkyl group having from 1 to 4 carbons, and
R³, R⁴, and R⁵ each independently represent an alkyl group having from 1 to 4 carbons.
